# FASCICULE DE BREVET EUROPEEN

(11) **EP 3 112 955 B1**
(45) Date de publication et mention de la délivrance du brevet: **24.01.2018**
(21) Numéro de dépôt: 16169515.0
(22) Date de dépôt: 13.05.2016
(51) Int. Cl.: G04D 3/00, G04D 3/02, G04B 17/34

(54) **PROCÉDÉ DE FABRICATION D'UNE PIÉCE COMPORTANT UNE ÉTAPE DE BRUNISSAGE MODIFIÉE**
HERSTELLUNGSVERFAHREN EINES WERKSTÜCKS, DAS EINEN MODIFIZIERTEN POLIERSCHRITT UMFASST
METHOD FOR MANUFACTURING A PART COMPRISING A MODIFIED BROWNING STEP

(30) Priorité: 16.06.2015 EP 15172322
(43) Date de publication de la demande: 04.01.2017
(73) Titulaire: Nivarox-FAR S.A., 2400 Le Locle (CH)
(72) Inventeur: Cusin, Pierre, 1423 Villars-Burquin (CH); Cretenet, Davy, 25650 La Chaux-de-Gilley (FR); Stranczl, Marc, 1260 Nyon (CH); Garret, Raphaël, 2300 La Chaux-de-Fonds (CH)
(74) Mandataire: Goulette, Ludivine

(56) Documents cités:
- EP-A1- 0 401 373
- EP-A1- 2 107 433
- EP-A1- 2 317 406
- CH-A- 229 235
- FELGENTREU G: "LEISTUNGSFAEHIGE BAUTEILE DURCH OBERFLAECHEN-WALZTECHNIK", MTZ MOTORTECHNISCHE ZEITSCHRIFT, VIEWEG VERLAG, WIESBADEN, DE, vol. 55, 1 janvier 1994 (1994-01-01), pages 32-36, XP000448089, ISSN: 0024-8525

## Description

### Domaine de l'invention

L'invention se rapporte à un procédé de fabrication d'un composant horloger comportant une étape de brunissage modifiée et, plus précisément, une telle étape permettant une planéité de surface améliorée.

### Arrière-plan de l'invention

Il est connu du document WO 2015/185423 de former un composant horloger à partir d'une pièce comportant un matériau à base de silicium ou de céramique qui est directement soudé par rayonnement électromagnétique sur une autre pièce comme, par exemple, un métal ou un alliage métallique.

Dans le cadre de ce développement, il est apparu important que l'interstice entre les pièces ne doive pas excéder 0,5 micromètre sous peine que celles-ci ne puissent pas être soudées.

### Résumé de l'invention

Le but de la présente invention est de pallier tout ou partie les inconvénients cités précédemment en proposant un nouveau procédé de fabrication d'un composant horloger avec au moins une surface de contact comportant une planéité améliorée permettant l'assemblage des pièces par soudage.

A cet effet, l'invention se rapporte à un procédé de fabrication d'un composant horloger comportant les étapes suivantes :
- se munir d'une barre à base de métal ;
- décolleter la barre pour former au moins un diamètre comportant une surface sensiblement verticale et une surface sensiblement horizontale ;
- brunir la barre pour augmenter sa dureté et améliorer son état de surface et ainsi obtenir une première pièce à base de métal ;
- monter une surface de la première pièce sur une surface d'une deuxième pièce ;
- souder, par rayonnement électromagnétique du type laser, la surface de la première pièce montée sur la surface de la deuxième pièce afin de les solidariser.
caractérisé en ce que, lors de l'étape de brunissage, le brunissoir est déplacé le long de la surface sensiblement verticale jusqu'à ce que le brunissoir entre également en contact avec la surface sensiblement horizontale afin de polir ladite surface sensiblement horizontale lorsque le brunissoir est éloigné de ladite surface sensiblement verticale.

Avantageusement selon l'invention, le procédé de fabrication permet d'offrir une face avec une surface parfaitement plane et perpendiculaire garantissant son soudage.

Conformément à d'autres variantes avantageuses de l'invention :
- l'étape de décolletage forme également une paroi oblique entre la surface sensiblement verticale et la surface sensiblement horizontale afin d'éviter de former une bavure lors du contact du brunissoir contre ladite surface sensiblement horizontale ;
- l'étape de décolletage forme également une paroi courbe autour de ladite une surface sensiblement horizontale afin d'éviter de former une bavure lors du contact du brunissoir contre ladite surface sensiblement horizontale.
- la deuxième pièce est à base de silicium ou à base de céramique ;
- la deuxième pièce comporte en outre au moins un revêtement partiel de métal, d'oxyde de silicium, de nitrure de silicium, de carbure de silicium ou d'un allotrope du carbone ;
- la première pièce à base de métal comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un résonateur balancier - spiral ;
- la figure 2 est une représentation en perspective d'un spiral selon l'invention ;
- la figure 3 est une représentation en perspective d'un arbre de balancier selon l'invention ;
- la figure 4 est une représentation en coupe d'un assemblage selon le document WO 2015/185423 ;
- les figures 5 et 6 sont des représentations en coupe d'un brunissage selon un premier mode de réalisation de l'invention ;
- les figures 7 et 8 sont des représentations en coupe d'un brunissage selon un deuxième mode de réalisation de l'invention ;
- la figure 9 est une représentation en coupe d'un assemblage selon l'invention.

### Description détaillée des modes de réalisation préférés

L'invention se rapporte à un composant formé à l'aide d'une pièce dont le matériau ne comporte pas de domaine plastique utilisable, c'est-à-dire avec un domaine plastique très restreint, avec une autre pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former un boîtier, un cadran, un réhaut, une glace, une lunette, un poussoir, une couronne, un fond de boîtier, une aiguille, un bracelet, un spiral, un balancier, une ancre, un pont, une masse oscillante ou même un mobile comme une roue d'échappement totalement ou partiellement à base de matériaux fragiles.

Préférentiellement, le matériau à base de silicium utilisé pour la réalisation du spiral compensateur peut être du silicium monocristallin quelle que soit son orientation cristalline, du silicium monocristallin dopé quelle que soit son orientation cristalline, du silicium amorphe, du silicium poreux, du silicium polycristallin, du nitrure de silicium, du carbure de silicium, du quartz quelle que soit son orientation cristalline ou de l'oxyde de silicium. Bien entendu d'autres matériaux peuvent être envisagés comme un verre, une céramique, un cermet, un métal ou un alliage métallique. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

Comme expliqué ci-dessus, l'autre pièce peut comporter le même type de matériau ou un autre type de matériau. Ainsi, préférentiellement, l'autre pièce est à base de métal et peut comporter un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

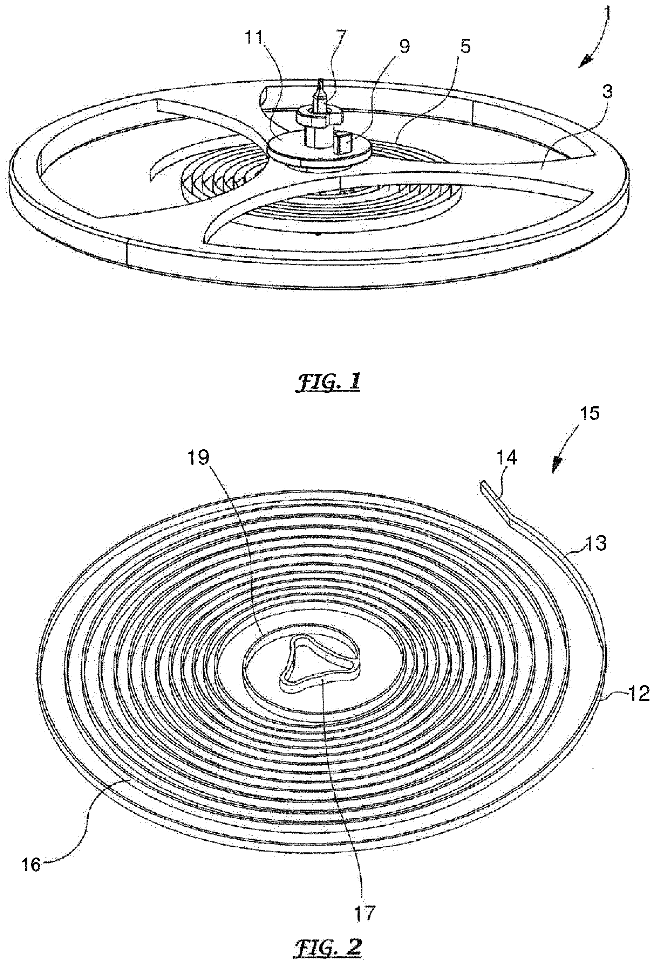

Par simplification, l'explication ci-dessous sera portée sur un assemblage entre un spiral et un arbre de balancier. A la figure 1, on peut voir un résonateur 1 dans lequel le spiral 5 est utilisé pour compenser thermiquement l'ensemble du résonateur 1, c'est-à-dire toutes les parties et notamment le balancier 3 monté sur le même arbre 7 de balancier. Le résonateur 1 coopère avec un système d'entretien comme, par exemple, un échappement à ancre suisse (non représenté) coopérant avec la cheville 9 du plateau 11 également monté sur l'arbre 7.

Un spiral compensateur 15 est mieux visible à la figure 2. Il comporte une lame unique 16 s'enroulant sur elle-même entre une spire interne 19 venue de forme avec une virole 17 et une spire externe 12 comportant une extrémité 14 destinée à être pitonnée. Comme visible à la figure 2, afin d'améliorer l'isochronisme du résonateur dans lequel est utilisé le spiral 15, ce dernier comporte une spire interne 19 comprenant une courbe du type Grossmann et une spire externe 12 comprenant une portion épaissie 13 par rapport au reste du spiral 15. Enfin, on peut voir que la virole 17 comporte une bande unique s'étendant selon une forme sensiblement triangulaire afin que la virole montre un caractère élastique lorsqu'elle est ajustée sur l'arbre notamment pour autoriser son centrage par rapport à ce dernier.

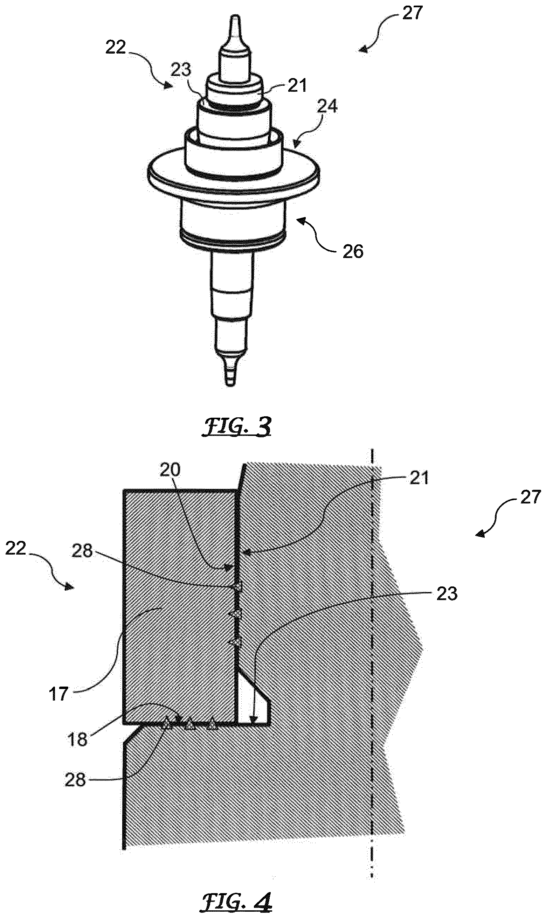

Un arbre 27 est mieux visible à la figure 3. Il comporte notamment plusieurs diamètres 22, 24, 26 destinés à recevoir respectivement le spiral, le balancier et le plateau. Comme illustré à la figure 3, le diamètre 22 comporte une tige 21 cylindrique bordée dans sa partie inférieure par une portée 23.

Comme illustré à la figure 4, le diamètre 22 est destiné à recevoir, entre la tige 21 et la portée 23, la virole 17 du spiral 15. Plus précisément, la face intérieure 20 de la virole 17 est plaquée élastiquement contre la surface externe de la tige 21 et la face inférieure 18 de la virole 17 est plaquée contre la portée 23. Enfin, comme visible sous la référence 28, la tige 21 et/ou la portée 23 est soudée à la virole 17 comme enseigné dans le document WO 2015/185423.

Toutefois, dans le cadre du développement de l'enseignement du document WO 2015/185423, il est rapidement ressorti que l'interstice entre les pièces ne doit pas excéder 0,5 micromètre sous peine que celles-ci ne puissent pas être soudées.

Le procédé selon le premier mode de réalisation de l'invention comporte donc une première étape destinée à se munir d'une barre apte à subir un décolletage. L'exemple se rapportant à un assemblage entre un spiral et un arbre de balancier, la barre peut être à base de métal ou d'alliage métallique.

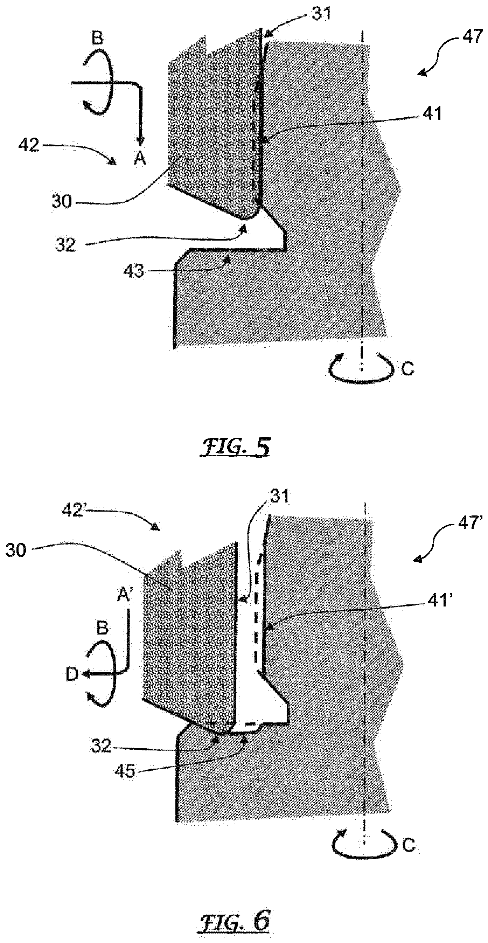

La deuxième étape est destinée à décolleter les différents diamètres nécessaires pour former l'arbre 47 de balancier et notamment le diamètre 42 apte à recevoir la virole 17 du spiral 15. A la figure 5, on peut voir que le diamètre 42 comporte une surface sensiblement verticale 41 formant une ébauche de la tige et une surface sensiblement horizontale 43 formant une ébauche de portée.

Le procédé se poursuit avec une troisième étape destinée brunir la surface sensiblement verticale 41 pour augmenter sa dureté et améliorer son état de surface et ainsi former la tige 41'. Avantageusement selon l'invention, lors d'une première phase de l'étape de brunissage, le brunissoir 30 monté rotatif selon B est déplacé selon la direction A en contact avec sa face principale 31 contre le long de la surface sensiblement verticale 41 également montée rotative selon C comme visible à la figure 5.

De plus, lors d'une deuxième phase de l'étape de brunissage, le brunissoir 30 continue son déplacement selon la direction A' jusqu'à ce que le brunissoir 30 entre également en contact avec sa face latérale 32 contre la surface sensiblement horizontale 43. On comprend alors que la face latérale 32 du brunissoir 30 va polir la surface sensiblement horizontale 43 lorsque le brunissoir 30 est éloigné selon la direction D de ladite surface sensiblement verticale formée par la tige 41' en formant une portée 45 parfaitement plane et horizontale comme visible à la figure 6.

Ainsi, après une étape de finition comportant, par exemple, une étape d'ébarbage, l'arbre obtenu 47' offre une surface 45 de soudage parfaitement plane garantissant un soudage avec une autre pièce comme enseigné dans le document WO 2015/185423.

Dans une quatrième étape du procédé, la virole 17 est ensuite ajustée sur le diamètre 42', c'est-à-dire que la face intérieure 20 de la virole 17 est plaquée élastiquement contre la surface de la tige 41' et que la face inférieure 18 de la virole 17 est plaquée contre la surface de la portée 45.

Enfin, dans une étape finale de soudage, au moins une partie de la face intérieure 20 et/ou la face inférieure 18 de la virole 17 est soudée par laser sur l'arbre 47' avec une garantie que le spiral 15 et l'arbre 47' soient solidarisés.

Le procédé selon le deuxième mode de réalisation de l'invention comporte une première étape destinée à se munir d'une barre apte à subir un décolletage. L'exemple se rapportant à un assemblage entre un spiral et un arbre de balancier, la barre peut être à base de métal ou d'alliage métallique.

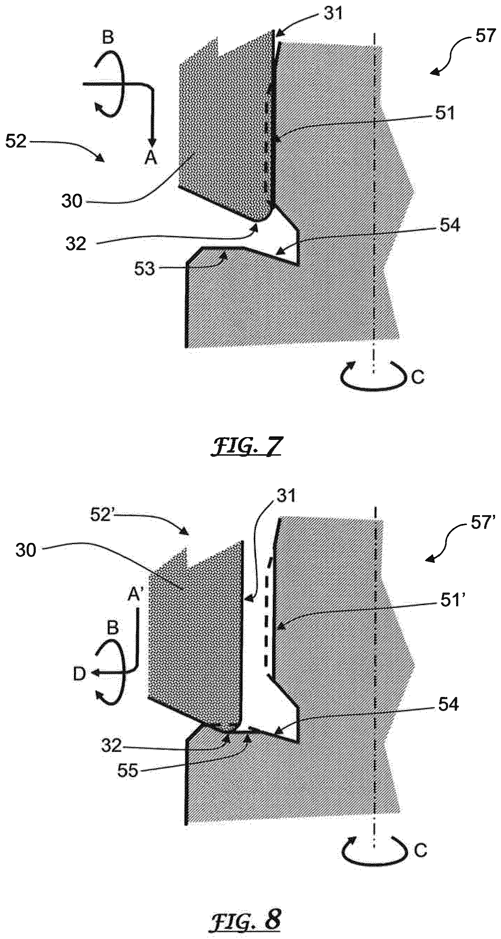

La deuxième étape est destinée à décolleter les différents diamètres nécessaires pour former l'arbre 57 de balancier et notamment le diamètre 52 apte à recevoir la virole 17 du spiral 15. A la figure 7, on peut voir que le diamètre 52 comporte une surface sensiblement verticale 51 formant une ébauche de la tige et une surface sensiblement horizontale 53 formant une ébauche de portée.

Comme visible à la figure 7, en comparaison de la figure 5, l'étape de décolletage est destinée à former volontairement une paroi oblique 54 partant de la piqûre de l'outil de décolletage vers la surface sensiblement horizontale 53 qui est toujours sensiblement perpendiculaire à la surface sensiblement verticale 51 mais selon une largeur bien plus restreinte que la surface 43 de la figure 5. On comprend dans le cas de l'arbre que la paroi oblique 54 forme ainsi un cône.

Le procédé se poursuit avec une troisième étape destinée brunir la surface sensiblement verticale 51 pour augmenter sa dureté et améliorer son état de surface et ainsi former la tige 51'. Avantageusement selon l'invention, lors d'une première phase de l'étape de brunissage, le brunissoir 30 monté rotatif selon B est déplacé selon la direction A en contact avec sa face principale 31 contre le long de la surface sensiblement verticale 51 également montée rotative selon C comme visible à la figure 7.

De plus, lors d'une deuxième phase de l'étape de brunissage, le brunissoir 30 continue son déplacement selon la direction A' jusqu'à ce que le brunissoir 30 entre également en contact avec sa face latérale 32 contre la surface sensiblement horizontale 53. On comprend alors que la face latérale 32 du brunissoir 30 va polir la surface sensiblement horizontale 53 lorsque le brunissoir 30 est éloigné selon la direction D de ladite surface sensiblement verticale formée par la tige 51' en formant une portée 55 parfaitement plane et horizontale comme visible à la figure 8.

On comprend donc qu'après une étape de finition comportant, par exemple, une étape d'ébarbage, l'arbre obtenu 57' offre une surface 55 de soudage parfaitement plane garantissant un soudage avec une autre pièce comme enseigné dans le document WO 2015/185423. On s'aperçoit également que, par rapport au premier mode de réalisation, le deuxième mode de réalisation évite la formation de bavure entre l'ébauche 43 et la portée définitive 45 comme visible à la figure 6.

Dans une quatrième étape du procédé, la virole 17 est ensuite ajustée sur le diamètre 52', c'est-à-dire que sa face interne 20 soit contre la surface de la tige 51' et sa face inférieure 18 soit contre la surface de la portée 55.

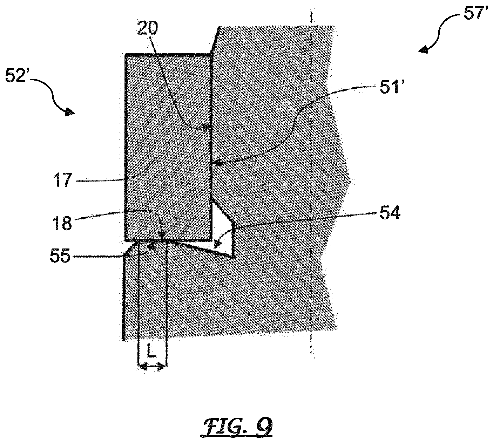

Enfin, dans une étape finale de soudage, au moins une partie de la face intérieure 20 et/ou la face inférieure 18 de la virole 17 est soudée par laser sur l'arbre 57' avec une garantie que le spiral 15 et l'arbre 57' soient solidarisés comme illustré à la figure 9. On remarque également que, par rapport au premier mode de réalisation, le deuxième mode de réalisation permet d'offrir une surface de soudage de la portée 55 réduite à une largeur L qui incidemment est encore moins sujette à des problèmes de planéité.

Bien entendu, la présente invention ne se limite pas à l'exemple illustré mais est susceptible de diverses variantes et modifications qui apparaîtront à l'homme de l'art. En particulier, le brunissoir 30 ne saurait se limiter à celui présenté dans la présente description. En effet, suivant les applications souhaitées, il pourrait être de géométrie différente pour obtenir des surfaces différentes.

De plus, en alternative à la paroi oblique 54 du deuxième mode de réalisation, l'étape de décolletage pourrait être destinée à former volontairement une paroi courbe partant de la piqûre de l'outil de décolletage. On comprend, dans cette alternative, que la paroi courbe formerait ainsi une surface torique à la place d'une surface plane 53 suivie d'un cône 54 comme dans le deuxième mode de réalisation.

## Revendications

1. Procédé de fabrication d'un composant horloger comportant les étapes suivantes :
- se munir d'une barre à base de métal ;
- décolleter la barre pour former au moins un diamètre (42, 52) comportant une surface sensiblement verticale (41, 51) et une surface sensiblement horizontale (43, 53) ;
- brunir la barre pour augmenter sa dureté et améliorer son état de surface et ainsi obtenir une première pièce (47', 57') à base de métal ;
- monter une surface (41', 45, 51', 55) de la première pièce (47', 57') sur une surface (18, 20) d'une deuxième pièce (15) ;
- souder, par rayonnement électromagnétique du type laser, la surface (41', 45, 51', 55) de la première pièce (47', 57') montée sur la surface (18, 20) de la deuxième pièce (15) afin de les solidariser.
**caractérisé en ce que**, lors de l'étape de brunissage, le brunissoir (30) est déplacé le long de la surface sensiblement verticale (41, 51) jusqu'à ce que le brunissoir (30) entre également en contact avec la surface sensiblement horizontale (43, 53) afin de polir ladite surface sensiblement horizontale (43, 53) lorsque le brunissoir est éloigné de ladite surface sensiblement verticale (41, 51).

2. Procédé selon la revendication précédente, **caractérisé en ce que** l'étape de décolletage forme également une paroi oblique (54) entre la surface sensiblement verticale (41, 51) et la surface sensiblement horizontale (43, 53) afin d'éviter de former une bavure lors du contact du brunissoir (30) contre ladite surface sensiblement horizontale (43, 53).

3. Procédé selon la revendication précédente 1, **caractérisé en ce que** l'étape de décolletage forme également une paroi courbe autour de ladite une surface sensiblement horizontale (43, 53) afin d'éviter de former une bavure lors du contact du brunissoir (30) contre ladite surface sensiblement horizontale (43, 53).

4. Procédé selon l'une des revendications précédentes, **caractérisée en ce que** la deuxième pièce (15) est à base de silicium ou à base de céramique.

5. Procédé selon la revendication précédente, **caractérisée en ce que** la deuxième pièce (15) comporte en outre au moins un revêtement partiel de métal, d'oxyde de silicium, de nitrure de silicium, de carbure de silicium ou d'un allotrope du carbone.

6. Procédé selon l'une des revendications précédentes, **caractérisée en ce que** la première pièce (47', 57') à base de métal comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

## Patentansprüche

1. Verfahren zum Herstellen einer Uhrenkomponente, umfassend die folgenden Schritte:
- Bereitstellen eines Stabs auf Metallbasis;
- Drehbearbeiten des Stabs, um mindestens einen Durchmesser (42, 52) zu bilden, der eine im Wesentlichen vertikale Oberfläche (41, 51) und eine im Wesentlichen horizontale Oberfläche (43, 53) aufweist;
- Polieren des Stabs, um seine Härte zu erhöhen und um seinen Oberflächenzustand zu verbessern und um somit ein erstes Teil (47', 57') auf Metallbasis zu erhalten;
- Montieren einer Oberfläche (41', 45, 51', 55) des ersten Teils (47', 57') auf eine Oberfläche (18, 20) eines zweiten Teils (15);
- Verschweißen der Oberfläche (41', 45, 51', 55) des ersten Teils (47', 57'), das auf die Oberfläche (18, 20) des zweiten Teils (15) montiert ist, durch elektromagnetische Strahlung des Laser-Typs, um sie fest miteinander zu verbinden,
**dadurch gekennzeichnet, dass** im Schritt des Polierens der Polierstahl (30) entlang der im Wesentlichen vertikalen Oberfläche (41, 51) verschoben wird, bis der Polierstahl (30) auch mit der im Wesentlichen horizontalen Oberfläche (43, 53) in Kontakt gelangt, um die im Wesentlichen horizontale Oberfläche (43, 53) zu polieren, wenn der Polierstahl von der im Wesentlichen vertikalen Oberfläche (41, 51) entfernt ist.

2. Verfahren nach dem vorhergehenden Anspruch, **dadurch gekennzeichnet, dass** der Drehbearbeitungsschritt ferner eine schräge Wand (54) zwischen der im Wesentlichen vertikalen Oberfläche (41, 51) und der im Wesentlichen horizontalen Oberfläche (43, 53) bildet, um zu vermeiden, dass bei einem Kontakt des Polierstahls (30) mit der im Wesentlichen horizontalen Oberfläche (43, 53) ein Formgrat gebildet wird.

3. Verfahren nach Anspruch 1, **dadurch gekennzeichnet, dass** der Schritt des Polierens ferner eine um die im Wesentlichen horizontale Oberfläche (43, 53) gekrümmte Wand bildet, um zu vermeiden, dass bei einem Kontakt des Polierstahls (30) mit der im Wesentlichen horizontalen Oberfläche (43, 53) ein Formgrat gebildet wird.

4. Verfahren nach einem der vorhergehenden Ansprüche, **dadurch gekennzeichnet, dass** das zweite Teil (15) auf Siliciumbasis oder auf Keramikbasis hergestellt ist.

5. Verfahren nach dem vorhergehenden Anspruch, **dadurch gekennzeichnet, dass** das zweite Teil (15) ferner zumindest eine Teilbeschichtung aus Metall, Siliciumoxid, Siliciumnitrid, Siliciumcarbid oder einem Kohlenstoffallotrop umfasst.

6. Verfahren nach einem der vorhergehenden Ansprüche, **dadurch gekennzeichnet, dass** das erste Teil (47', 57') auf Metallbasis eine Eisenlegierung, eine Kupferlegierung, Nickel oder eine seiner Legierungen, Titan oder eine seiner Legierungen, Gold oder eine seiner Legierungen, Silber oder eine seiner Legierungen, Platin oder eine seiner Legierungen, Ruthenium oder eine seiner Legierungen, Rhodium oder eine seiner Legierungen oder Palladium oder eine seiner Legierungen enthält.

## Claims

1. Method for fabrication of a timepiece component comprising the following steps:
- taking a bar made from metal;
- profile turning the bar to form at least one diameter portion (42, 52) comprising a substantially vertical surface (41, 51) and a substantially horizontal surface (43, 53);
- burnishing the bar to increase its hardness and improve its surface state and thereby obtain a first part (47', 57') made from metal;
- mounting a surface (41', 45, 51', 55) of the first part (47', 57') on a surface (18, 20) of a second part (15);
- welding, by laser electromagnetic radiation, the surface (41', 45, 51', 55) of the first part (47', 57') mounted on the surface (18, 20) of the second part (15), in order to secure them to each other.
**characterized in that**, in the burnishing step, the burnisher (30) is moved along the substantially vertical surface (41, 51) until the burnisher (30) also enters into contact with the substantially horizontal surface (43, 53), in order to polish the substantially horizontal surface (43, 53) when the burnisher is moved away from the substantially vertical surface (41, 51).

2. Method according to the preceding claim, **characterized in that** the turning step also forms an oblique wall (54) between the substantially vertical surface (41, 51) and the substantially horizontal surface (43, 53) to prevent a burr forming when the burnisher (30) comes into contact with the substantially horizontal surface (43, 53).

3. Method according to the preceding claim 1, **characterized in that** the turning step also forms a curved wall around the one substantially horizontal surface (43, 53) to prevent a burr forming when the burnisher (30) comes into contact with the substantially horizontal surface (43, 53).

4. Method according to one of the preceding claims, **characterized in that** the second part (15) is made from silicon or from ceramic.

5. Method according to the preceding claim, **characterized in that** the second part (15) also includes at least a partial coating of metal, silicon oxide, silicon nitride, silicon carbide or an allotrope of carbon.

6. Method according to one of the preceding claims, **characterized in that** the first part (47', 57') made from metal includes an iron alloy, a copper alloy, nickel or an alloy thereof, titanium or an alloy thereof, gold or an alloy thereof, silver or an alloy thereof, platinum or an alloy thereof, ruthenium or an alloy thereof, rhodium or an alloy thereof, or palladium or an alloy thereof.
